# EUROPÄISCHE PATENTANMELDUNG

(11) **EP 0 718 220 A1**
(43) Veröffentlichungstag der Anmeldung: **26.06.1996**
(21) Anmeldenummer: 95250264.9
(22) Anmeldetag: 31.10.1995
(51) Int. Cl.: B65G 47/38

(54) **Förderer zum Sortieren von Fördergut**

(30) Priorität: 21.12.1994 DE 4447360
(71) Anmelder: MANNESMANN Aktiengesellschaft, D-40213 Düsseldorf (DE)
(72) Erfinder: Becker, Klaus, Dr.-Ing., D-58300 Wetter (DE); Ostholt, Rüdiger, D-58300 Wetter (DE)
(74) Vertreter: Presting, Hans-Joachim, Dipl.-Ing.

(57) **Zusammenfassung**

Die Erfindung betrifft einen Förderer zum Sortieren von Fördergut, mit mindestens einem angetriebenen und über Laufräder in Schienen geführten Wagen, mit einem zum Abgeben des Stückgutes über eine erste Kippvorrichtung quer zum Verlauf der Schienen bewegbaren Tragelement je Wagen und mit einer zweiten Kippvorrichtung je Wagen zum Horizontalhalten des Tragelementes, bestehend aus einer zumindest teilweise parallel zu den Schienen verlaufenden Zusatzschiene und aus einer Führungsrolle, die in die Zusatzschiene eingreift und die Horizontalhaltebewegung auf das Tragelement überträgt.

Um einen Förderer zum Sortieren von Fördergut zu schaffen, der eine sichere Sortierung der Fördergüter unabhängig von der Steigung oder dem Gefälle der Fahrstrecke ermöglicht und gleichzeitig eine Horizontalführung des Tragelements für das Fördergut aufweist, die unabhängig von der Ausgestaltung der Kippvorrichtung des Tragelements ist, wird vorgeschlagen, daß die zweite Kippvorrichtung (11) eine Grundplatte (10) aufweist, die um quer zum Verlauf der Schienen ausgerichtete Achsen (13) schwenkbar mit dem Wagen (2) verbunden und zwischen der ersten Kippvorrichtung (12) und dem Wagen (2) angeordnet ist.

## Beschreibung

Die Erfindung betrifft einen Förderer zum Sortieren von Fördergut gemäß dem Oberbegriff des Anspruches 1.

Aus der DE 29 21 388 A1 ist ein derartiger Förderer zum Sortieren von Fördergut mit einer Vielzahl von hintereinander angeordneten Wagen bekannt. Jeder Wagen weist eine Tragplatte für das Fördergut auf, die an einer Kippvorrichtung zum Ausschleusen des Fördergutes um eine in Förderrichtung ausgerichtete Achse nach beiden Seiten gelagert ist. Die Tragplatte ist an einem Ende mit Gelenken, die quer zur Fahrtrichtung ausgerichtete Achsen aufweisen, mit einer entsprechende Abmessungen aufweisenden Zwischenplatte verbunden. Diese Zwischenplatte ist wiederum an ihrem den Gelenken für die Tragplatte abgewandten Ende an der Kippvorrichtung gelagert. Somit ergibt sich ein ziehharmonikaartiger Aufbau zwischen der Kippvorrichtung sowie der Zwischen- und Tragplatte, der gewählt wurde, um die Tragplatte mit dem Fördergut bei der Durchfahrung von Schienenabschnitten mit Steigung oder Gefälle in einer horizontalen Lage halten zu können. Hierzu sind jeweils seitlich an der Trag- sowie an der Zwischenplatte, jeweils an den den Gelenken abgewandten Enden Führungsrollen angeordnet, die im Bereich der Schienenabschnitte mit Gefälle oder Steigung in Zusatzschienen geführt. Die Zusatzschienen sind in ihrem Verlauf an die Schienen für die Wagen so angepaßt, daß über die Führungsrollen die Tragplatte horizontal gehalten wird. Bei der Durchfahrung von Gefällestrecken kommt die Führungsrolle an der Tragplatte zum Eingriff mit der Zusatzschiene und führt somit zu einer Auslenkung der Tragplatte relativ zu der Zwischenplatte, die in ihrer Auflagestellung auf dem Grundelement verbleibt. Im Falle der Durchfahrung von Steigungsabschnitten kommt die in Fahrtrichtung gesehen hintere Führungsrolle, die an der Zwischenplatte angeordnet ist, mit der Zusatzschiene in Eingriff und führt somit zu einem Auslenken der Zwischenplatte relativ zu der Kippvorrichtung, wobei die Tragplatte in ihrer Auflagestellung auf der Zwischenplatte verbleibt. Zum Ausschleusen der Fördergüter ist die gesamte Einheit, bestehend aus Trag- und Zwischenplatte über die Kippvorrichtung schwenkbar mit dem Wagen verbunden.

Dieser Förderer zum Sortieren von Fördergut erweist sich als nachteilig, da jeweils für die Durchfahrung von Schienenabschnitten mit Gefälle oder Steigung eine gesonderte Führungsrolle an der Tragplatte bzw. Zwischenplatte vorzusehen ist. Des weiteren sind die Führungsrollen und die zugehörigen Zusatzschienen im Bereich unmittelbar neben der Tragplatte angeordnet, so daß bei vorstehenden bzw. herunterhängenden Fördergütern die Gefahr des Einklemmens besteht. Darüber hinaus sind die Kippvorrichtungen für den Horizontalausgleich und für die Abwurfbewegung derart miteinander verbunden, daß bei Ausfall der Kippvorrichtung für das Ausschleusen der Fördergüter auch eine Demontage der Kippvorrichtung für den Höhenausgleich erforderlich ist.

Desweiteren ist in der DE 35 00 704 A1 ein Verteilförderer für Fördergut beschrieben, der im wesentlichen aus einer Vielzahl von längs einer endlosen Bahn umlaufenden Wagen gebildet ist. Jeder Wagen mit einer eine Tragplatte für das Fördergut versehen, die an vorbestimmten Stellen zum Abladen des Förderguts aus der horizontalen Lage heraus neigbar ist. Des weiteren sind an jedem Wagen zwei Rollenträger mit Laufrädern gelenkig angeordnet, die in Fahrrichtung des Wagens gesehen hintereinander und seitlich versetzt sind, sowie jeweils auf einer Schiene abrollen. Diese Schienen sind nebeneinander und voneinander beabstandet sowie in horizontalen Abschnitten der Fahrstrecke auf einem Höhenniveau angeordnet. In Abschnitten mit Gefälle oder Steigung sind die Schienen derart höhenversetzt zueinander, daß die Rollenhalter mit den Laufrädern, obwohl diese in Fahrtrichtung gesehen hintereinander angeordnet sind, auf einem Höhenniveau verbleiben und somit die horizontale Ausrichtung der Tragplatten erhalten wird. Hierzu muß jeder Rollenträger um eine vertikale Achse und eine horizontale Achse schwenkbar sein.

Als nachteilig erweist sich, daß für die Ausbildung der zueinander parallelen Schienen, insbesondere in den Abschnitten mit Gefälle oder Steigung und der Rollenhalter ein unangemessen großer baulicher Aufwand erforderlich ist.

Der vorliegenden Erfindung liegt die Aufgabe zugrunde, einen Förderer zum Sortieren von Fördergut zu schaffen, die eine sichere Sortierung der Fördergüter unabhängig von der Steigung oder dem Gefälle der Fahrstrecke ermöglicht und gleichzeitig eine Horizontalführung des Tragelements für das Fördergut aufweist, die unabhängig von der Ausgestaltung der Kippvorrichtung des Tragelements ist.

Die Aufgabe wird erfindungsgemäß durch einen Förderer zum Sortieren von Fördergut mit den Merkmalen des Anspruches 1 gelöst. Vorteilhafte Ausgestaltungen der Erfindung sind in den Ansprüchen 2 bis 10 angegeben.

Erfindungsgemäß wird durch die Anordnung einer um quer zum Verlauf der Schienen ausgerichtete Achsen schwenkbaren Grundplatte auf dem Wagen zum Horizontalhalten des Tragelements für das Fördergut sowie durch die Befestigung der Kippvorrichtung für das Tragelement auf dieser Grundplatte erreicht, daß ein Förderer zum Sortieren von Fördergut geschaffen wird, der unabhängig von der Ausbildung der Kippvorrichtung für das Tragelement eine sichere Horizontalhaltebewegung durchführen kann. Diese klare Trennung der Kippvorrichtung für das Tragelement und der Kippvorrichtung für die Horizontalhaltebewegung ermöglicht bei Reparatur- und Wartungsvorgängen an der ersten Kippvorrichtung für das Tragelement, die erste Kippvorrichtung einschließlich der Grundplatte schnell auszuwechseln.

Besonders vorteilhaft erweist sich, daß die Grundplatte aus einer Grundstellung, in der das Tragelement horizontal ausgerichtet ist, für die Horizontalhaltebewegung bei der Durchfahrung von Abschnitten der Schiene mit Steigung oder Gefälle jeweils nach oben oder nach unten kippbar ist, da hierdurch beide Kippbewegungen mit einer einzigen Führungsrolle durchgeführt werden können. Die Anordnung der Zusatzschiene neben oder unterhalb der Schienen und die Verbindung der Führungsrolle über einen Stab mit der Grundplatte ermöglicht, die gesamte Kippvorrichtung für die Horizontalhalbebewegung unterhalb der ersten Kippvorrichtung für das Tragelement anzuordnen, so daß hier nicht die Gefahr besteht, daß vorstehende oder herunterhängende Fördergüter sich zwischen der Zusatzschiene und der Führungsrolle einklemmen können und somit zu einer Störung des Förderers führen.

Eine besonders kompakte Bauweise wird erzielt, wenn als Schiene zwei U-förmige Schienen vorgesehen sind, die paarweise parallel, voneinander beabstandet und mit ihren offen Seiten einander zugewandt angeordnet sind und die Zusatzschiene zwischen den U-förmigen Schienen und/oder in dem nach unten hieran anschließenden Bereich angeordnet ist, sowie der Stab in den Raum zwischen den U-förmigen Schienen hinein- oder hindurchführt.

Eine besonders konstruktiv einfache Bauweise bei gleichzeitig hoher Sortierleistung wird erreicht, wenn auf einer durch die Schiene gebildeten geschlossenen Bahn eine endlose Kette von hintereinander angeordneten Wagen vorgesehen ist, die über Gelenke miteinander verbunden sind, wobei die Wagen im wesentlichen T-förmig aus einem Längs- und einem Querträger gebildet sind und die Achsen der Grundplatte an dem Querträger gelagert sind. Diese T-förmige Ausbildung der Wagen ermöglicht die Anordnung von Lauf- und Führungsrädern an den äußeren Enden des Querträgers über Rollenhalter, die bei einem horizontal ruhenden Wagen gesehen um eine senkrechte Achse schwenkbar sind, daß jeder Wagen mit nur zwei tragenden Laufrädern auskommt, da an dem den Laufrädern abgewandten Ende eine Abstützung des Wagens über den nachfolgenden Wagen erfolgt.

Aus Sicherheitsgründen erweist es sich als vorteilhaft, die zweite Kippvorrichtung für die Grundplatte mit einer Verriegelung für die horizontale Lage des Tragelements zu versehen. Im Zusammenhang mit dieser Verriegelung kann vorteilhafterweise in horizontalen Abschnitten der Schienen auf eine Zusatzschiene verzichtet werden, da das Tragelement über die Verriegelung in einer horizontalen Lage verbleibt. In diesem Fall ist vorgesehen, daß bei Ein- und Ausfahrt aus der Zusatzschiene die Verriegelung über einen Anschlag und ein Mitnehmer ver- bzw. entriegelt wird.

Ein Ausführungsbeispiel der Erfindung ist in der Zeichnung dargestellt und wird im folgenden näher beschrieben. Es zeigen:
- Fig. 1: eine Seitenansicht eines Förderers zum Sortieren von Fördergut mit mehreren Wagen,
- Fig. 2: einen Querschnitt von Fig. 1,
- Fig. 3: eine Draufsicht von einem Ausschnitt der Fig. 2 aus dem Bereich eines Überganges von einem horizontalen Abschnitt der Schienen zu einem Abschnitt mit Steigung sowie ohne Darstellung des Tragelements,
- Fig. 4: eine Draufsicht von einem Ausschnitt der Fig. 2 aus dem Bereich eines Überganges von einem Abschnitt der Schiene mit Steigung zu einem horizontalen Abschnitt sowie ohne Darstellung des Tragelements,

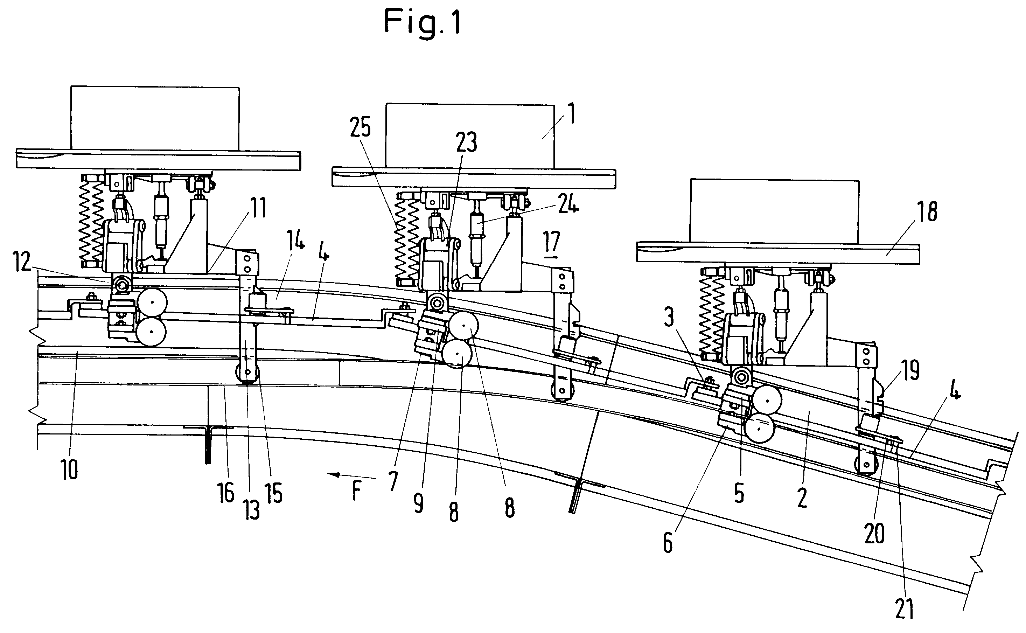

Die Figur 1 zeigt eine Seitenansicht eines Förderers zum Sortieren von Fördergut 1 mit mehreren in Fahrtrichtung F gesehen hintereinander angeordneten Wagen 2, die jeweils über ein Gelenk 3 zu einer endlosen Ketten untereinander verbunden sind. Die Wagen 2 bestehen im wesentlichen aus einem Längsträger 4 und einem hierzu T-förmig angeordneten Querträger 5. Der Längsträger 4 dient an seinen Enden zur Aufnahme der Gelenke 3 und ist über den Querträger 5 für das Gelenk 3 hinaus verlängert. An dem Querträger 5 sind über Rollenhalter 6, die ihrerseits - bei einem Wagen 2 in horizontaler Lage gesehen - um senkrechte Achsen 7 schwenkbar an dem Querträger 5 gelagert sind, Laufräder 8 und ein Führungsrad 9 gelagert. Die Laufräder 8 sind übereinander angeordnet und laufen an den Ober- und Untergurten einer im Schnitt dargestellten U-förmigen Schiene 10 ab, und das Führungsrad 9 wird an dem Steg der Schiene 10 geführt.

Auf dem Wagen 2 ist an dessen Querträger 5 eine Grundplatte 11 über Achsen 12, die quer zur Fahrtrichtung F ausgerichtet sind, gelagert. Die Grundplatte 11 erstreckt sich bei horizontal ausgerichtetem Wagen 2 gesehen parallel zu dem Längsträger 4 und ist an ihrem den Achsen 12 abgewandten Ende mit einem Stab 13 verbunden, der sich senkrecht nach unten und über den Längsträger 4 hinaus erstreckt. Der Stab 13 ist über eine Verriegelung 14 an dem Längsträger 4 befestigbar, um die Grundplatte 11 in einer zu dem Längsträger 4 parallelen Grundstellung zu halten. An dem über den Längsträger 4 hinausragenden und der Grundplatte 11 abgewandten Ende des Stabs 13 ist eine Führungsrolle 15 gelagert, die um eine quer zur Fahrtrichtung F ausgerichtete Achse drehbar ist. Die Führungsrolle 15 wird von einer Zusatzschiene 16 geführt, über die bei gelöster Verriegelung 14 die Grundplatte 11 in einer weitestgehend horizontalen Lage halten wird und somit das über eine weitere Kippvorrichtung 17 auf der Grundplatte 11 angeordnete Tragelement 18 für das Fördergut 1 in einer horizontalen Lage gehalten wird. Hierzu wird in einer Schnittebene quer zur Fahrtrichtung F gesehen in Abschnitten der Schiene 10 mit Steigung oder Gefälle der Abstand zwischen den Laufflächen für die Laufräder 8 der Wagen 2 und den Laufflächen der Führungsrolle 15 so weit vermindert, daß die Grundplatte 11 über den Stab 13 um die Achsen 12 nach oben schwenkt und somit das Tragelement 18 in einer horizontalen Lage gehalten wird.

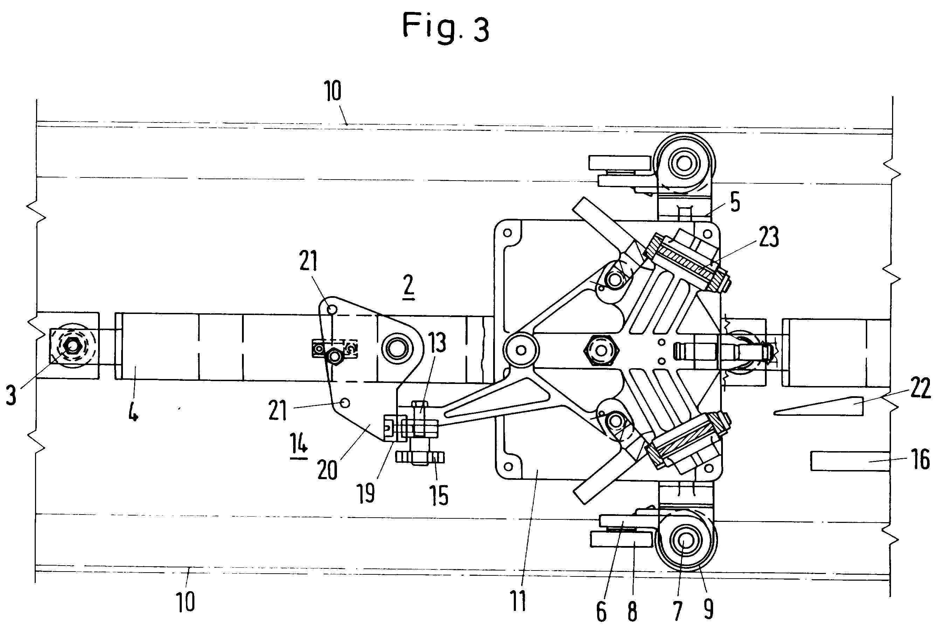

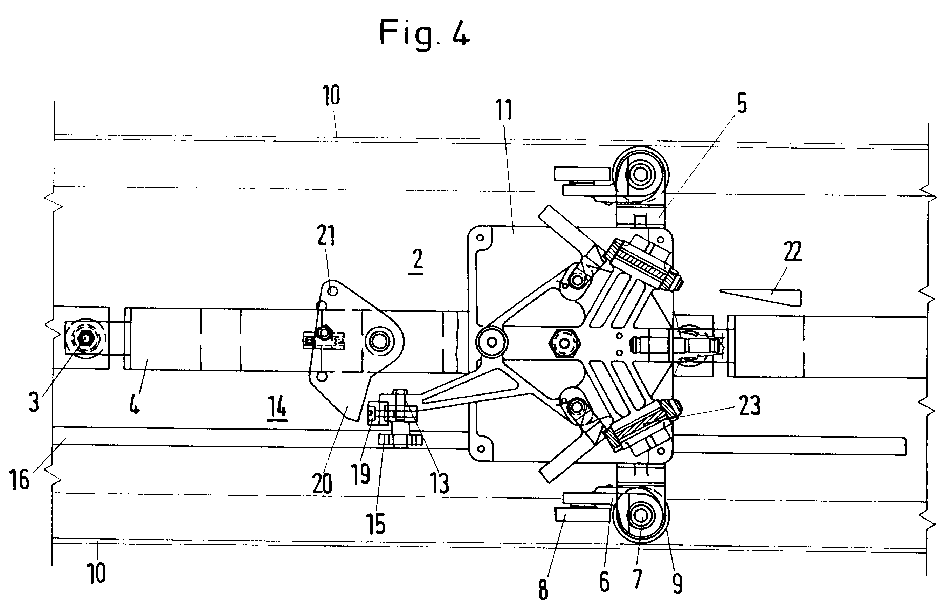

Die Verriegelung 14 besteht im wesentlichen aus einer an dem Stab angeordneten Ausnehmung 19, in die ein Riegel 20 zur Verriegelung einschwenkbar ist. Der Riegel 20 ist um eine senkrecht zu dem Längsträger 4 und auf diesem angeordnete Achse schwenkbar angeordnet und ist mittels eines in Richtung der Zusatzschiene 16 ragenden Mitnehmers 21 ver- bzw. entriegelbar. Hierzu ist jeweils in Bereichen vor Abschnitten der Schiene 10 mit Gefälle oder Steigung ein Anschlag 22 (s. Figuren 3 und 4) vorgesehen, der bei Vorbeifahrt des Wagens 2 den Mitnehmer 21 und somit den Riegel 20 in seine Offenstellung verschiebt. Dementsprechend ist nach dem Ende eines Abschnitts der Schiene 10 mit Gefälle oder Steigung ein weiterer Anschlag 22 vorgesehen, von dem der Mitnehmer 21 mit dem Riegel 20 in die Verriegelungsstellung geschwenkt wird. Die Zusatzschiene 16 kann entlang der gesamten Strecke der Schienen 10 parallel zu diesen geführt werden oder nur in Abschnitten der Schiene 10 mit Gefälle oder Steigung. Für den ersteren Fall kann die Verriegelung 14 entfallen oder aus Sicherheitsgründen erhalten bleiben.

Die Kippvorrichtung 17 zwischen dem vorzugsweise als Tragschale ausgebildetem Tragelement 18 und der Grundplatte 11 ist im vorliegenden Fall im wesentlichen aus zwei Kniehebeln 23, einem Dämpfer 24 und einem Federelement 25 gebildet. Durch Einknicken eines Kniehebels 23 einer Seite ist das Tragelement 6 um eine schräg zur Fahrrichtung F des Wagens 2 verlaufende Kippachse seitlich zum Abwerfen der Fördergüter 1 schwenkbar. Anstatt dieser Kippvorrichtung können auch andere Kippmechanismen vorgesehen werden.

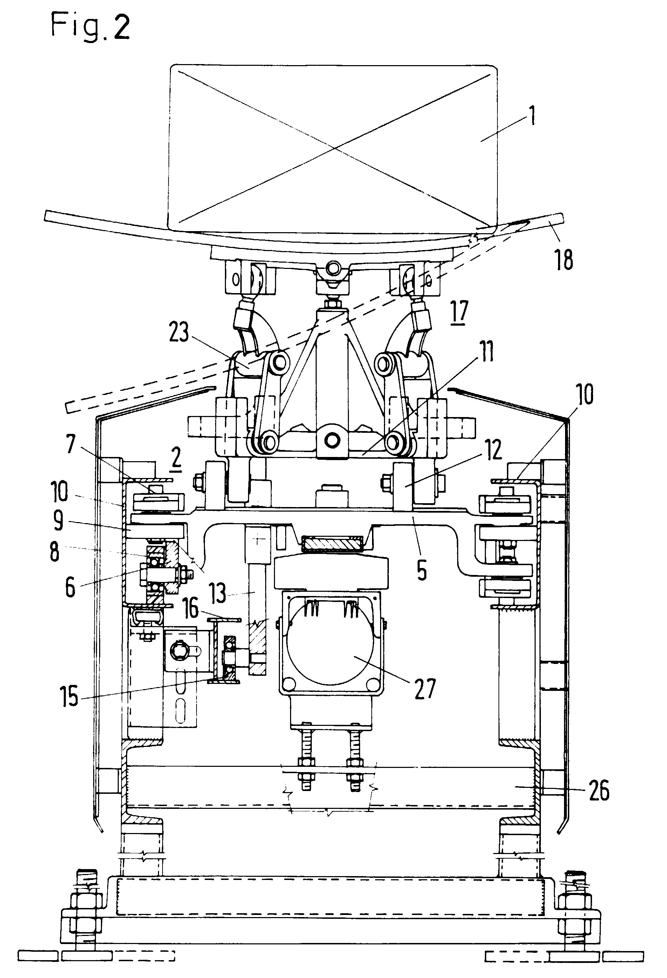

In Fig. 2 ist ein Querschnitt von Fig. 1 dargestellt, aus dem ersichtlich ist, daß zwei Schienen 10 vorgesehen sind, die jeweils U-förmig ausgebildet sind, voneinander beabstandet und mit ihren offenen Seiten jeweils einander zugewandt sind. Die U-förmigen Schienen 10 sind über einen Tragrahmen 26 auf dem Hallenboden abgestützt. An dem Tragrahmen 26 ist zusätzlich die ebenfalls U-förmig ausgebildete Zusatzschiene 16 befestigt, die in dem hier dargestellten horizontalen Abschnitt der Schienen 10 in einem Bereich angeordnet sind, der sich unterhalb des Raumes zwischen den Schienen 10 erstreckt. In Abschnitten der Schienen 10 mit Gefälle oder Steigung verlagert sich die Zusatzschiene 16 zunehmend in den Zwischenraum zwischen den Schienen 10 hinein, um über den Stab 13 die Grundplatte 11 in einer horizontalen Lage zu halten. In dem hier gezeigten Ausführungsbeispiel sind die Wagen 2 über einen Linearmotor 27 angetrieben. Des weiteren ist ersichtlich, daß die Führungsrollen 15 an den Stegen der Schienen 10 abrollen.

Darüber hinaus wurde bei der Kippvorrichtung 17 der Dämpfer 24 und das Federelement 25 aus Übersichtsgründen nicht dargestellt. Dafür wurde aber das Tragelement 6 in gekippter Lage als Strichlinie dargestellt.

Die Fig. 3 zeigt eine Draufsicht von einem Ausschnitt der Fig. 2 aus dem Bereich eines Übergangs von einem horizontalen Abschnitt der Schiene zu einem Abschnitt mit Steigung, wobei das Tragelement 6 und die Kniehebel 23 nicht dargestellt wurden.

Die Fig. 4 zeigt einen Wagen 2 wie in Fig. 3, jedoch aus dem Bereich eines Übergangs von einem Abschnitt der Schiene mit Steigung zu einem horizontalen Abschnitt. Aus diesen beiden Figuren ist ersichtlich, daß bei der Ausführung des Förderers mit Zusatzschienen 16 nur in Abschnitten der Schienen 10 mit Steigung und Gefälle an den jeweiligen Übergangsbereichen ein Anschlag 22 vorgesehen ist, der bei Vorbeifahrt eines Wagens 2, dessen Mitnehmer 21 von dem Riegel 20 der Verriegelung 14 betätigt und hiermit gemäß Fig. 3 den Riegel 20 derartig verschwenkt, daß dieser aus der Ausnehmung 19 des Stabs 13 herausschwenkt und somit den Stab 13, der mit seiner Führungsrolle 15 mittlerweile von der Zusatzschiene 16 geführt wird, von dem Längsträger 4 des Wagens 2 entriegelt.

In der Fig. 4 ist der umgekehrte Vorgang dargestellt, indem die Zusatzschiene 16 und die Schienen 10 wieder derartig beabstandet sind, daß der Riegel 20 in die Ausnehmung 19 einschwenken kann, um die Grundplatte 11 gegenüber dem Wagen 2 zu verriegeln. Der Verriegelungsvorgang erfolgt wieder über einen im Bereich vor dem Ende der Zusatzschiene 16 angeordneten Anschlag 22, der den vorbeifahrenden Mitnehmer 21 betätigt, so daß eine Verriegelung des Stabs 13 stattfindet, bevor die Führungsrolle 15 die Zusatzschiene 16 verläßt.

Der Einlauf der Zusatzschiene 16 ist jeweils trichterförmig ausgebildet, um das Einfahren der Führungsrolle 15 zu erleichtern.

### Bezugszeichenliste

- 1: Fördergut
- 2: Wagen
- 3: Gelenk
- 4: Längsträger
- 5: Querträger
- 6: Rollenhalter
- 7: Achsen
- 8: Laufräder
- 9: Führungsräder
- 10: Schiene
- 11: Grundplatte
- 12: Achsen
- 13: Stab
- 14: Verriegelung
- 15: Führungsrolle
- 16: Zusatzschiene
- 17: Kippvorrichtung
- 18: Tragelement
- 19: Ausnehmung
- 20: Riegel
- 21: Mitnehmer
- 22: Anschlag
- 23: Kniehebel
- 24: Dämpfer
- 25: Federelement
- 26: Tragrahmen
- 27: Linearmotor
- F: Fahrtrichtung

## Patentansprüche

1. Förderer zum Sortieren von Fördergut, mit mindestens einem angetriebenen und über Laufräder auf mindestens einer Schiene verfahrbaren Wagen, mit einem zum Abgeben des Stückgutes über eine erste Kippvorrichtung quer zum Verlauf der Schienen bewegbaren Tragelement je Wagen und mit einer zweiten Kippvorrichtung je Wagen zum Horizontalhalten des Tragelementes in Abschnitten der Schienen mit Gefälle oder Steigung, bestehend aus einer Zusatzschiene und aus einer Führungsrolle, die in die Zusatzschiene eingreift und die Horizontalhaltebewegung auf das Tragelement überträgt,
dadurch gekennzeichnet,
daß die zweite Kippvorrichtung (17) eine Grundplatte (11) aufweist, die um quer zum Verlauf der Schiene (10) ausgerichtete Achsen (12) schwenkbar mit dem Wagen (2) verbunden und zwischen der ersten Kippvorrichtung (17) und dem Wagen (2) angeordnet ist.

2. Förderer nach Anspruch 1,
dadurch gekennzeichnet,
daß die Grundplatte (11) aus einer Grundstellung, in der das Tragelement (18) horizontal ausgerichtet ist, für die Horizontalhaltebewegung nach oben und nach unten kippbar ist.

3. Förderer nach Anspruch 1 oder 2,
dadurch gekennzeichnet,
daß die Zusatzschiene (16) neben oder unterhalb der Schienen (10) angeordnet ist und die Führungsrolle (15) über einen Stab (13) mit der Grundplatte (11) verbunden.

4. Förderer nach Anspruch 3,
dadurch gekennzeichnet,
daß zwei U-förmige Schienen (10) vorgesehen sind, die paarweise parallel, voneinander beabstandet und mit ihren offenen Seiten einander zugewandt angeordnet sind, die Zusatzschiene (16) zwischen den U-förmigen Schienen (10) und/oder im dem nach unten hieran anschließenden Bereich angeordnet ist sowie der Stab (13) in den Raum zwischen den U-förmigen Schienen (10) hineinragt oder hindurchführt.

5. Förderer nach einem der Ansprüche 1 bis 4,
dadurch gekennzeichnet,
daß die eine Vielzahl von hintereinander angeordneten Wagen (2) vorgesehen sind, die über Gelenke (3) miteinander verbunden sind, die Wagen (2) im wesentlichen T-förmig und aus einem Längsträger (4) und einem Querträger (5) gebildet sind und die Achsen (12) der Grundplatte (11) an dem Querträger (5) gelagert sind.

6. Förderer nach Anspruch 4,
dadurch gekennzeichnet,
daß an den äußeren Enden des Querträgers (5) über Rollenhalter (6) die Laufräder (8) und Führungsräder (9) gelagert, der Rollenhalter (6) bei einem auf einem horizontalen Abschnitt der Schienen (10) ruhenden Wagen (2) gesehen um eine senkrechte Achse (7) schwenkbar und die Achsen (7) der Laufräder (8) in Fahrtrichtung (F) gesehen hinter der Achse (7) der Rollenhalter (6) angeordnet sind.

7. Förderer nach einem der Ansprüche 1 bis 6,
dadurch gekennzeichnet,
daß die zweite Kippvorrichtung (17) mit einer Verriegelung (14) für die horizontale Lage des Tragelements (18) versehen ist.

8. Förderer nach Anspruch 7,
dadurch gekennzeichnet,
daß die Zusatzschiene (16) ausschließlich in Abschnitten der Schiene (10) mit Steigung und Gefälle angeordnet ist.

9. Förderer nach Anspruch 7 oder 8,
dadurch gekennzeichnet,
daß die Verriegelung (11) durch einen Anschlag (22) vor Einlauf in einen Abschnitt der Schienen (10) mit Steigung oder Gefälle entriegelt und nach Auslauf aus dem Abschnitt der Schiene (10) mit Steigung oder Gefälle durch einen weiteren Anschlag (22) verriegelt wird.

10. Förderer nach einem der Ansprüche 1 bis 9,
dadurch gekennzeichnet,
daß das Tragelement (6) als Tragschale ausgebildet ist.
